# EUROPÄISCHE PATENTSCHRIFT

(11) **EP 0 530 431 B1**
(45) Veröffentlichungstag und Bekanntmachung des Hinweises auf die Patenterteilung: **27.03.1996**
(21) Anmeldenummer: 92101585.5
(22) Anmeldetag: 31.01.1992
(51) Int. Cl.: B23B 31/12

(54) **Bohrfutter**
Drilling chuck
Mandrin de perçage

(30) Priorität: 31.08.1991 DE 4129048
(43) Veröffentlichungstag der Anmeldung: 10.03.1993
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 468 128
- CH-A- 118 048
- DE-A- 3 540 223
- DE-A- 3 727 147
- FR-A- 555 215
- US-A- 1 894 515
- US-A- 2 546 351
- US-A- 3 558 146

## Beschreibung

Die Erfindung betrifft ein Bohrfutter für ein drehendes oder drehschlagendes Bohrwerkzeug, mit einem koaxial an eine Bohrspindel anschließbaren Futterkörper, mit einer zur Futterachse koaxialen, drehbar und axial unverschiebbar am Futterkörper gelagerten Stellhülse, mit Führungsbohrungen, deren Führungsachsen in einer zur Futterachse koaxialen, sich nach vorn zum Bohrwerkzeug hin verjüngenden Kegelfläche verlaufen, ferner mit in den Führungsbohrungen verschiebbar geführten Spannbacken, die zwischen sich eine Aufnahme für den Schaft des Bohrwerkzeugs bilden, wozu die in den Führungsbohrungen um die jeweilige Führungsachse begrenzt verdrehbaren Spannbacken je eine zur Anlage am Werkzeugschaft kommende, sich im wesentlichen parallel zur Futterachse erstreckende Spannkante aufweisen, die sich im wesentlichen nur oberhalb, d. h. auf der der Bohrspindel zugewandten Seite der durch die Führungsachsen gehenden Kegelfläche erstreckt, und mit einem mit der Futterachse koaxialen Stellgewinde, das an jeder Spannbacke zu deren Verschieben mit einer an der Spannbacke ausgebildeten Zahnreihe im Eingriff steht, wobei das Stellgewinde an der Stellhülse und die Führungsbohrungen am Futterkörper oder, im Falle eines selbsttätig spannenden Bohrfutters mit Nachspannbegrenzung, umgekehrt das Stellgewinde am Futterkörper und die Führungsbohrungen an der Stellhülse vorgesehen sind.

Aus DE 37 27 147 A1 ist ein Bohrfutter dieser Art bekannt, bei dem die Führungsbohrungen an der Stellhülse und das Stellgewinde am Futterkörper ausgebildet sind. Das Bohrfutter besitzt daher selbst- und nachspannende Eigenschaften, ermöglicht also ein Spannen sowohl von Hand an der Stellhülse als auch im Sinne eines selbsttätigen Nachspannens während des Bohrens durch die Reaktionsmomente des Bohrwerkzeugs, indem dessen Drehwiderstand über die Spannbacken in gleicher Weise wie ein Verdrehen der Stellhülse von Hand eine Spannbewegung am Stellgewinde bewirkt. Zur Nachspannbegrenzung, die bei Bohrwerkzeugen mit relativ weichem Werkzeugschaft verhindert, daß sich die Spannkanten beim Nachspannen zu tief in den Werkzeugschaft eingraben, dient ein Sperring, der am Futterkörper zwischen jeweils zwei Grenzstellungen verdrehbar und axial verschiebbar geführt ist und in seiner axial gegen die Stellhülse vorgeschobenen Grenzstellung in drehfestem Eingriff an der Stellhülse steht, so daß deren Nachspannbewegung auf denjenigen Drehweg beschränkt ist, der dem Sperring zwischen seinen beiden Grenzstellungen eingeräumt ist. Im übrigen verläuft bei diesem bekannten Bohrfutter an jeder Spannbacke die Spannkante in der durch die Führungsachse der Spannbacke und durch die Futterachse gehenden Axialebene.

Aus US 1 894 515 ist ein Bohrfutter der eingangs genannten Art bekannt, bei dem die Führungsbohrungen am Futterkörper und das Stellgewinde an der Stellhülse angeordnet sind. Das Bohrfutter wird mit Hilfe eines Schlüssels gespannt und gelöst und besitzt keinerlei selbst- oder nachspannende Eigenschaften. An jeder Spannbacke dieses bekannten Bohrfutters liegt die Spannkante, gesehen in der Drehrichtung des Bohrfutters beim Bohren, hinter der durch die Führungsachse der Führungsbohrung der Spannbacke und durch die Futterachse gehenden Axialebene. Das hat zur Folge, daß die sich beim Einspannen des Bohrwerkzeugs nur mit ihrer Spannkante gegen den Werkzeugschaft legenden Spannbacken ein Drehmoment um ihre Führungsachse erfahren. Da die Spannbacken durch ein auf Fertigungstoleranzen beruhendes, unvermeidbares freies Spiel, bestehend zwischen dem Stellgewinde der Stellhülse und der Zahnreihe an den Spannbacken, in den Führungsbohrungen begrenzt verdrehbar sind, führt das auf sie wirkende Drehmoment zur Verdrehung der Spannbacken, bis deren Formschluß mit der Stellhülse die Drehbewegung beendet. Der Drehsinn der Spannbacken um die Führungsachse ist dabei derselbe wie der der Bohrfutterdrehung beim Bohren und entspricht damit auch dem Drehsinn, mit dem beim Bohren das Bohrwerkzeug aufgrund des Bohrwiderstands die Spannbacken über die am Bohrerschaft anliegenden Spannkanten um ihre Führungsachse zu verdrehen versucht. Daher werden die Spannbacken schon beim Einspannen des Bohrwerkzeugs, also schon bevor das Bohren überhaupt beginnt, in gerade die Endlage verdreht, in die sie sonst erst beim Bohrvorgang unter dem Einfluß des Bohrwiderstands gebracht würden. Dies führt zu den wesentlichen Vorteilen, daß die Drehlage aller Spannbacken von Anfang an eindeutig bestimmt ist und sich während des Bohrvorgangs nicht mehr ändern kann, mit dem Ergebnis, daß die Spanngenauigkeit verbessert und die Gefahr einer Lockerung der Werkzeugeinspannung während des Bohrens verringert wird.

Aus FR-A-555 215 ist ein Spannfutter mit ausschließlich in radialer Richtung im Futterkörper verschiebbaren Spannbacken bekannt, deren Spannkante, gesehen in der Drehrichtung des Spannfutters beim Arbeiten, vor der durch die Spannbackenmitte und durch die Futterachse gehenden Axialebene liegt. Die Spannbacken besitzen ein Spiel, das es ihnen erlaubt, sich in den Führungen parallel zu einer auf der Futterachse senkrechten Ebene aus der radialen Richtung zu drehen, was in Verbindung mit den versetzten Spannkanten eine zusätzliche Klemmwirkung der Spannbacken auf den zwischen ihnen eingespannten Schaft ergibt.

Der Erfindung liegt die Aufgabe zugrunde, ein Bohrfutter der eingangs genannten Art so weiter auszubilden, daß die Festigkeit der Einspannung des Bohrwerkzeugs zwischen den Spannbacken wesentlich verbessert wird.

Diese Aufgabe wird nach der Erfindung in Verbindung mit den eingangs genannten Merkmalen dadurch gelöst, daß die Spannkante mit ihrer am Werkzeugschaft im wesentlichen zur Anlage kommenden Länge an jeder Spannbacke, gesehen in der Drehrichtung des Bohrfutters beim Bohren, vor der durch die Führungsachse der Führungsbohrung der Spannbacke und durch die Futterachse gehenden Axialebene liegt und daß an jeder Spannbacke eine weitere Spannkante, gesehen in der Drehrichtung des Bohrfutters beim Bohren, hinter der ersten Spannkante vorgesehen ist, die bezüglich des Bohrfutters radial nach außen gegenüber der Tangentialebene versetzt ist, die durch die erste, voranlaufende Spannkante geht und senkrecht steht auf der durch die Führungsachse der Spannbacke und durch die Futterachse gehenden Axialebene.

Im Ergebnis liegt bei dem erfindungsgemäßen Bohrfutter die erste Spannkante an jeder Spannbacke, gerade umgekehrt wie bei dem aus US 1 894 515 bekannten Bohrfutter, vor der durch die Führungsachse und durch die Futterachse gehenden Axialebene, mit der Folge, daß die Spannbacken beim Einspannen des Bohrwerkzeugs in entgegen gesetzter Richtung wie bei diesem bekannten Bohrfutter verdreht werden, also entgegen gesetzt zu dem Drehsinn, mit dem sich das Bohrfutter beim Bohren dreht und mit dem das Bohrwerkzeug die Spannbacken aufgrund des Bohrwiderstands zu verdrehen versucht. Zwar wird auch beim erfindungsgemäßen Bohrfutter die Spannbackenverdrehung durch den dabei in Drehrichtung der Spannbacken letztlich zustande kommenden Formschluß zwischen deren Zahnreihe und dem Stellgewinde beendet, jedoch in einer Endlage, die das Verdrehungsspiel der Spannbacken gerade in entgegen gesetzter Richtung wie bei dem aus US 1 894 515 bekannten Bohrfutter begrenzt. Bezogen auf den Drehsinn des Bohrfutters beim Bohren sind die Spannbacken in der durch das Einspannen des Bohrwerkzeugs erzwungenen Endlage mit der Spannkante beim erfindungsgemäßen Bohrfutter vorverdreht, bei dem aus US 1 894 515 bekannten Bohrfutter zurückverdreht. Die vorverdrehte Endlage der Spannbacken führt zwar in gleicher Weise wie die zurückverdrehte Endlage beim bekannten Bohrfutter zu dem Vorteil der hohen Einspann- und damit auch Rundlaufgenauigkeit des Bohrfutters mit eingespanntem Bohrwerkzeug, öffnet aber nun beim erfindungsgemäßen Bohrfutter die beim bekannten Bohrfutter fehlende Möglichkeit, daß sich die Spannbacken beim Bohren unter der Wirkung des auf sie vom Bohrerschaft ausgeübten Drehmoments aus der vorverdrehten Endlage in Richtung auf die zurückverdrehte Endlage hin drehen können, wenn an jeder Spannbacke die Spannkante im wesentlichen nur axial oberhalb der durch die Führungsachsen gehenden Kegelfläche mit dem Werkzeugschaft im Kraftschluß steht, und wenn im Falle des nachspannenden Bohrfutters, d. h. mit an der Stellhülse befindlichen Führungsbohrungen und am Futterkörper ausgebildetem Stellgewinde, die Stellhülse das Ende des ihr durch den Sperring eingeräumten Nachspannwegs erreicht hat. Die so beim Bohren bewirkte Spannbackendrehung ergibt eine gegen den Werkzeugschaft gerichtete Exzenterbewegung der Spannkante der Spannbacke mit der Folge, daß sich die Einspannung des Werkzeugschafts zwischen den Spannkanten nach Art einer Exzenterklemmung ganz wesentlich verfestigt und sich die Spannkanten, je nach Härte des Werkzeugschaftes, auch mehr oder weniger in den Schaft einbeißen können, was aus der kraftschlüssigen Werkzeugeinspannung eine formschlüssige Einspannung werden lassen kann. Aufgrund dieser exzentrischen Klemmwirkung beim Bohren ist es sogar unschwer möglich, bei dem erfindungsgemäßen Bohrfutter auch in seiner Ausführungsform ohne selbst- und nachspannende Eigenschaften, d. h. mit am Futterkörper vorgesehenen Führungsbohrungen und an der Stellhülse befindlichem Stellgewinde, auf eine Schlüsselspannung überhaupt zu verzichten. - Die dargelegte Funktionsweise des erfindungsgemäßen Bohrfutters bleibt selbstverständlich auch dann noch, wenn auch mehr oder weniger verschlechtert, erhalten, wenn sich die Spannkante an den Spannbacken nicht nur ausschließlich axial oberhalb der durch die Führungsachsen gehenden Kegelfläche erstreckt, sondern im Vergleich zu dieser Spannkantenlänge geringfügig auch nach unten in Richtung zum Bohrwerkzeug hin über die Kegelfläche vorsteht. Zwar ist dann bei der beim Bohren auftretenden Drehung der Spannbacken die Bewegung dieses nach unten über die Kegelfläche vorstehenden Spannkantenteils der Bewegung des sich oberhalb der Kegelfläche erstreckenden Spannkantenteils entgegen gesetzt, jedoch kann dadurch ersterer Kantenteil wegen seiner im Vergleich zu letzterem Kantenteil nur geringfügigen Länge keine die Drehung der Spannbacke ernsthaft behindernde Wirkung ausüben, insbes. jedenfalls dann, wenn der Werkzeugschaft weich genug ist, so daß sich der nach unten über die Kegelfläche vorstehende kurze Spannkantenteil erforderlichenfalls für seine gegenläufige Bewegung am Werkzeugschaft Platz graben kann. - Schließlich ist es im Rahmen der Erfindung auch nicht erforderlich, daß die Spannkanten exakt parallel zur Futterachse verlaufen. Sie können auch geringfügig schräg oder gewendelt gegenüber der Futterachse verlaufen, soweit sie dabei nur ausreichenden Abstand von der durch die Führungsachse der Spannbacke und durch die Futterachse gehenden Axialebene halten. Dieser Abstand muß jedenfalls so groß sein, daß sich beim Einspannen des Bohrwerkzeugs die Verstellung der Spannbacken in die vorverdrehte Endlage auch sicher ergibt und daß beim Bohren sich die Spannbacken mit der Spannkante nicht bis in diese Axialebene zurückverdrehen können, weil nur bei der Verdrehung bis dort hin die Exzenterklemmung der Spannkanten wirksam ist. Ist also beispielsweise der Werkzeugschaft weich und können sich daher die Spannkanten tiefer in ihn eingraben, ist die Verdrehung der Spannbacken beim Bohren entsprechend größer als bei einem härteren Werkzeugschaft, so daß der Abstand der Spannkanten von der jeweils zugeordneten Axialfläche bei einem harten Werkzeugschaft kleiner sein kann als bei einem weichen Schaft.

Bei einem weichen Werkzeugschaft kann im übrigen die Gefahr bestehen, daß sich der durch das Verdrehen der Spannbacken geklemmte Werkzeugschaft im Bohr-, insbes. Schlagbohrbetrieb freiarbeiten und lockern kann, indem sich nämlich die von den Spannkanten verursachten Einkerbungen im Werkzeugschaft zunehmend vertiefen und erweitern. Dadurch kann der Werkzeugschaft so beeinträchtigt werden, daß das Bohrwerkzeug nachfolgend nicht nochmals zuverlässig gespannt werden kann und daher unbrauchbar wird. Diese Gefahr wird durch die gegenüber der Tangentialebene durch die erste Spannkante versetzte zweite Spannkante verringert.
Zweckmäßigerweise beträgt der Abstand zwischen dieser Tangentialebene und der zweiten, nachlaufenden Spannkante etwa 0,1 mm. Jede Spannbacke kommt im Ergebnis zunächst nur mit der ersten, voranlaufenden Spannkante am Werkzeugschaft zur Anlage, so daß das Verdrehen der Spannbacke beim Bohren in die zurückverdrehte Endlage durch die zweite, nachlaufende Spannkante nicht beeinträchtigt wird. Erst wenn sich beim weiteren Eingraben der ersten, voranlaufenden Spannkante an den Rändern der im Werkzeugschaft entstehenden Einkerbungen ein Bart aufwirft, kommt die zweite, nachlaufende Spannkante an dem sich hinter der ersten Spannkante bildenden Bart zur Anlage, mit dem Ergebnis, daß dann der Werkzeugschaft an jeder Spannbacke an beiden Spannbacken gehalten ist, wodurch deren gemeinsames Einarbeiten in den Werkzeugschaft dann erheblich verringert wird. Vorzugsweise ist daher der Abstand zwischen den beiden Spannkanten, gesehen in Drehrichtung des Bohrfutters, etwa gleich der Dicke des Bartes, der sich an einem weichen Werkzeugschaft beim Eingraben der ersten, voranlaufenden Spannkante hinter ihr aufwirft. In der Regel wird zweckmäßigerweise die zweite, nachlaufende Spannkante, gesehen in Drehrichtung des Bohrfutters beim Bohren, hinter der Axialebene liegen, und zwar mit einem Abstand von ihr, der kleiner ist als der Abstand zwischen der Axialebene und der ersten, voranlaufenden Spannkante. In praktischen Versuchen hat es sich besonders bewährt, daß der jeweils auf die Axialebene bezogene Abstand der ersten, voranlaufenden Spannkante etwa 0,55 mm, der der zweiten, nachlaufenden Spannkante etwa 0,25 mm beträgt. Im übrigen empfiehlt es sich, die Anordnung so zu treffen, daß die Spannkanten Schneiden bilden, wobei an der ersten, voranlaufenden Spannkante der Schneidenwinkel etwa 60° und der Neigungswinkel beider Schneidenflanken je 30° gegenüber der Axialebene, an der zweiten, nachlaufenden Spannkante der Schneidenwinkel 90° und, bezogen auf die Axialebene, die Neigung der voranlaufenden Schneidenflanke 30° und der nachlaufenden Schneidenflanke 60° beträgt.

In der Regel stellen sich die Spannbacken beim Einspannen des Bohrwerkzeugs durch die dabei am Werkzeugschaft sich anlegenden, voranlaufenden Spannkanten selbsttätig in die vorverdrehte Endlage ein. Das setzt allerdings voraus, daß alle Spannbacken mit ihrer Spannkante gleichmäßig am Werkzeugschaft zur Anlage kommen, was aber dann beispielsweise nicht der Fall zu sein braucht, wenn der einzuspannende Werkzeugschaft durch als Folge vorangegangener Einspann- und Bohrvorgänge entstandene Einkerbungen und dergl. bereits zu sehr beschädigt und beeinträchtigt ist. Es kann sich daher empfehlen, die Einstellung der Spannbacken in die vorverdrehte Endlage auch bei noch offenem Bohrfutter schon sicher zu stellen. In einer hierfür bevorzugten Ausführungsform der Erfindung ist ein Federglied vorgesehen, daß die Spannbacken schon bei offenem Bohrfutter in die vorverdrehte Endlage verdreht, beim Bohren aber das Verdrehen der Spannbacken in die zurückverdrehte Endlage mit ebenfalls noch vor der Axialebene liegender erster Spannkante nicht verhindert. Zweckmäßigerweise ist das Federglied als Ring ausgebildet, der den Spannbacken jeweils in einer Sitzfläche anliegt, die mindestens um den Winkel der Vorverdrehung gegenüber der Tangentialebene geneigt ist, die auf der durch die Führungsachse der jeweiligen Spannbacke und durch die Futterachse gehenden Axialebene senkrecht steht. Das Federglied kann dabei ein elastisch biegbarer, in Umfangsrichtung geteilter Federring sein. Dann besteht die Möglichkeit, daß die Sitzfläche für den Federring von der Wandung einer in der Spannbacke vorgesehenen, den Federring aufnehmenden Querbohrung gebildet ist, so daß der Federring unmittelbar in den Spannbacken gehalten ist. Das Federglied kann aber auch ein im Umfang geschlossener und elastisch dehnbarer Ring sein. Unabhängig von diesen Ausbildungen des Federglieds im einzelnen besteht auch die sehr vorteilhafte Möglichkeit, daß bei am Futterkörper ausgebildeten Führungsbohrungen das in einer Ringnut der Stellhülse verlaufende Federglied den Spannbacken radial von außen anliegt. Die Verdrehung der Spannbacken durch das Federglied kann dann im übrigen dadurch erleichtert und begünstigt werden, daß das Federglied in Drehrichtung des Bohrfutters beim Bohren hinter jeder Spannbacke an einer radial eingezogenen Stützfläche des Futterkörpers anliegt, die den Verlauf des Federglieds so beeinflußt, daß dieses das gewünschte Drehmoment zur Vorverdrehung auf die Spannbacke ausübt. Eine andere in diesem Zusammenhang sehr vorteilhafte Ausführungsform ist dadurch gekennzeichnet, daß das Federglied für jede Spannbacke mit einer Nase versehen ist und jeweils nur mit der Nase an der Spannbacke anliegt, und zwar in Drehrichtung des Bohrfutters beim Bohren hinter der durch die Führungsachse der Spannbacke und durch die Futterachse gehenden Axialebene.

Selbstverständlich kann das Federglied auch anders als ringförmig gestaltet sein. Eine insoweit vorteilhafte Ausführungsform ist dadurch gekennzeichnet, daß das Federglied an jeder Spannbacke von einem elastischen Druckstück gebildet ist, das zwischen der Spannbacke und dem Stellgewinde auf der in Drehrichtung des Bohrfutters beim Bohren rückwärtigen Seite der durch die Führungsachse der Spannbacke und durch die Futterachse gehenden Axialebene liegt.

Im folgenden wird die Erfindung an einem in der Zeichnung dargestellten Ausführungsbeispiel näher erläutert; es zeigen:
- Fig. 1: ein erfindungsgemäßes Bohrfutter, teils in Seitenansicht teils im axialen Längsschnitt,
- Fig. 2: eine Seitenansicht der Spannbacken des Bohrfutters nach Fig. 1 in einem von den Patentansprüchen nicht erfaßten, weil nur mit der ersten Spannkante dargestellten Beispiel, um das Verständnis der Erfindung zu erleichtern,
- Fig. 3: eine Ansicht der Spannbacke nach Fig. 2 in Richtung des dort eingetragenen Pfeiles III,
- Fig. 4: eine Stirnansicht der Spannbacke nach den Fig. 2 und 3 in Richtung des in Fig. 3 eingetragenen Pfeiles IV,
- Fig. 5: einen Werkzeugschaft mit der ihm anliegenden Spannbacke in einer nur schematisch dargestellten Seitenansicht,
- Fig. 6: den Schnitt VI - VI in Fig. 5,
- Fig. 7: eine Seitenansicht des Werkzeugschaftes der Fig. 5 ohne Spannbacke in Richtung des Pfeiles VII,
- Fig. 8: eine andere Ausführungsform des erfindungsgemäßen Bohrfutters im Axialschnitt, teils in Seitenansicht,
- Fig. 9: den Schnitt in Richtung IX - IX durch das Bohrfutter nach Fig. 8,
- Fig. 10: eine weitere Ausführungsform des erfindungsgemäßen Bohrfutters in einer der Fig. 1 entsprechenden Darstellung,
- Fig. 11: den Schnitt XI - XI in Fig. 10,
- Fig. 12: den Gegenstand der Fig. 11 in vergrößerter Darstellung,
- Fig. 13: eine nochmals andere Ausführungsform des erfindungsgemäßen Bohrfutters in einer den Fig. 1 und 10 entsprechenden Darstellung,
- Fig. 14: den Schnitt XIV - XIV in Fig. 13,
- Fig. 15: den Gegenstand der Fig. 14 in vergrößerter Darstellung,
- Fig. 16 bis 18: Schnitte durch weitere Ausführungsformen des erfindungsgemäßen Bohrfutters in der den Fig. 14 und 15 entsprechenden Darstellung,
- Fig. 19: einen Querschnitt durch die Spannkantenausbildung der Spannbacken eines erfindungsgemäßen Bohrfutters, in einer etwa mit der Fig. 6 vergleichbaren Darstellung,
- Fig. 20: den Spannkantenbereich der Spannbacke nach Fig. 19 in vergrößerter Darstellung.

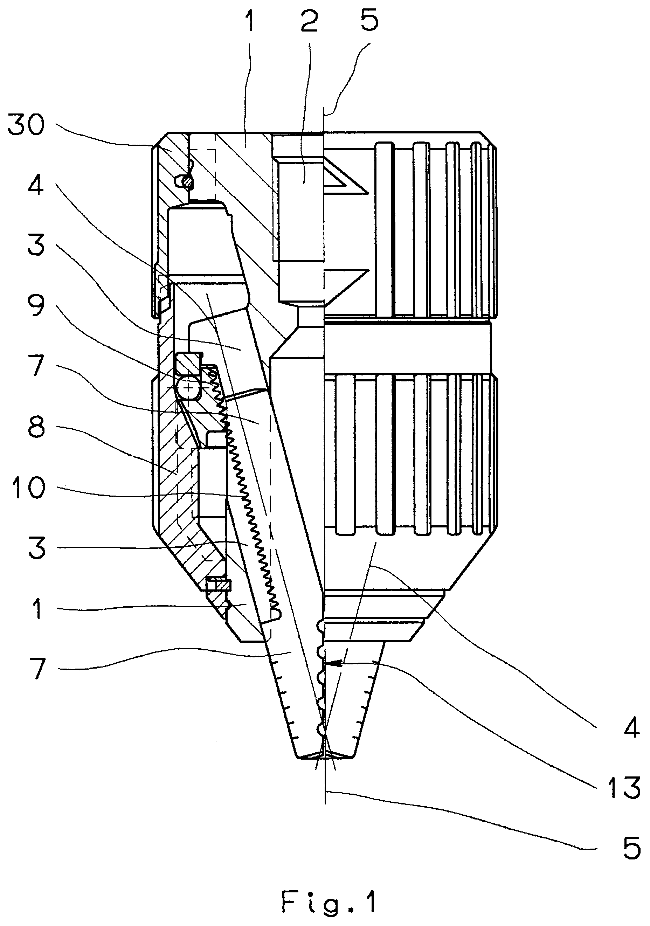

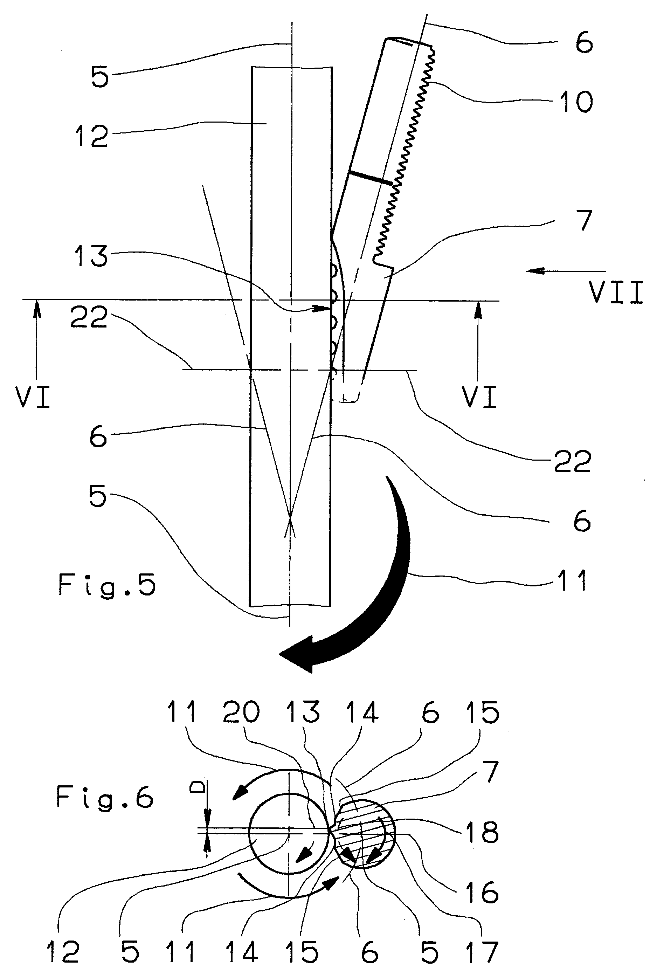

Die in den Fig. 1, 10 und 13 jeweils in ihrer Gesamtheit ohne Bohrwerkzeug dargestellten Bohrfutter umfassen einen Futterkörper 1, der mit einer Gewindeaufnahme 2 koaxial an eine ebenfalls nicht dargestellte Bohrspindel angeschlossen werden kann. Im Futterkörper 1 befinden sich über den Futterumfang gleichmäßig verteilt drei schräg zur Futterachse 5 geneigte Führungsbohrungen 3, deren Führungsachsen 4 in einer zur Futterachse 5 koaxialen, sich nach vorn zum Bohrwerkzeug hin verjüngenden Kegelfläche verlaufen, deren Spuren, d. h. Schnittlinien mit der Zeichenebene, in den Fig. 5 und 6 gestrichelt bei 6 dargestellt sind. In den Führungsbohrungen 3 sind verschiebbar in Richtung der Führungsachsen 4 Spannbacken 7 geführt, die im wesentlichen kreiszylindrischen Querschnitt besitzen. Am Futterkörper 1 ist koaxial mit der Futterachse 5 eine Stellhülse 8 drehbar und axial unverschiebbar gelagert. Zum Verschieben der Spannbacken 7 in den Führungsbohrungen 3 ist die Stellhülse 8 mit einem Stellgewinde 9 ausgestattet, das an jeder Spannbacke 7 mit einer an der Spannbacke ausgebildeten Zahnreihe 10 im Eingriff steht. Wird die Stellhülse 8 relativ zum Futterkörper 1 in demselben Drehsinn wie die in der Zeichnung durch die Pfeile 11 angedeutete Drehung des Bohrfutters beim Bohren verstellt, schieben sich die Spannbacken 7 in den Führungsbohrungen 3 zurück und das Bohrfutter öffnet sich. Verstellen der Stellhülse 8 im umgekehrten Drehsinn ergibt die entsprechend umgekehrte Bewegung der Spannbacken 7; sie schieben sich in den Führungsbohrungen 3 vor und spannen das Bohrwerkzeug zwischen sich ein. Zur Sicherung der Stellhülse 8 gegen ungewünschtes Verdrehen am Futterkörper 1 im Bohrbetrieb dient ein Sperring 30, der axial verschiebbar und in den Fig. 1, 10 und 13 unverdrehbar am Futterkörper 1 geführt ist. In der gegen die Stellhülse 8 vorgeschobenen, in den Figuren gezeigten Stellung steht der Sperring über einen Gewindeeingriff in drehfester Verbindung, so daß sich auch die Stellhülse 8 nicht verdrehen kann.

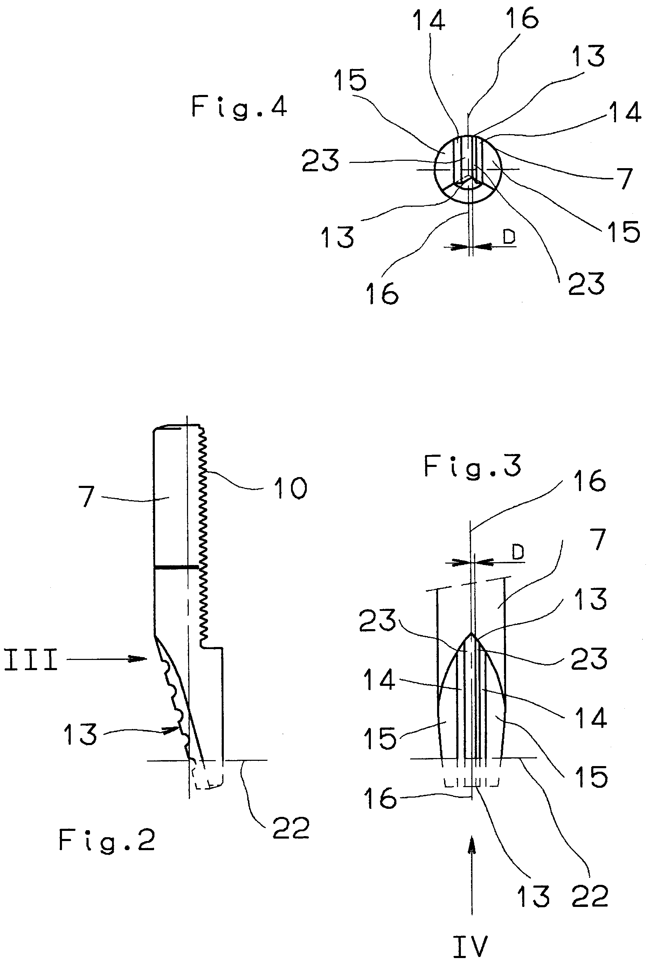

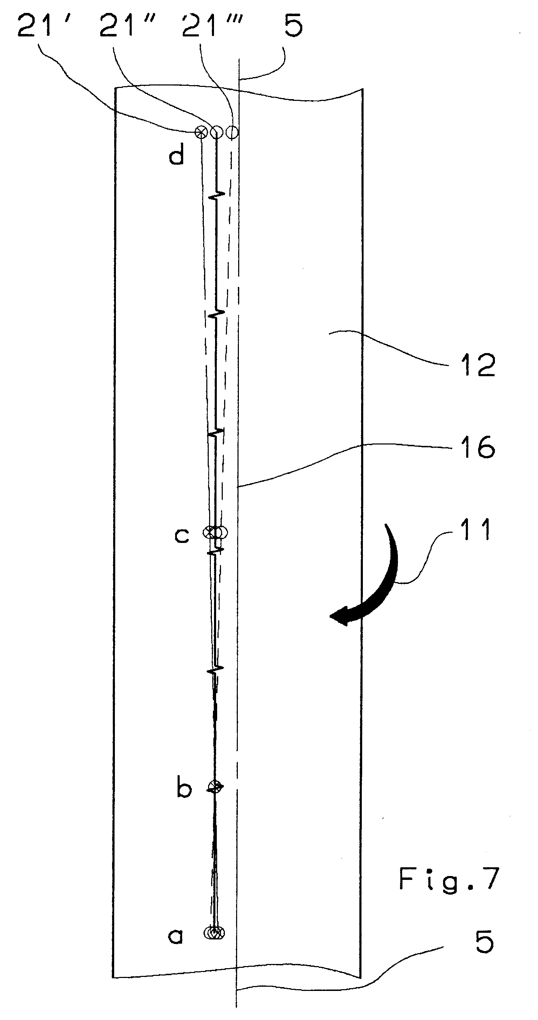

Zur Einspannung des Bohrwerkzeugs zwischen den Spannbacken 7 besitzt jede Spannbacke 7 eine am Schaft 12 des Bohrwerkzeugs (vgl. Fig. 5 bis 7) zur Anlage kommende erste Spannkante 13, die im wesentlichen parallel zur Futterachse 5 verläuft und über eine zur Futterachse 5 entsprechend parallele Sekantenfläche 14 vorsteht, an die sich seitliche Prismenflächen 15 anschließen, die zwischen sich den üblichen Winkel von 120° bilden, so daß die Spannbacken 7 auf sehr kleinen Spanndurchmesser zusammengefahren werden können. Die Spannkante 13 ist an jeder Spannbacke 7 aus der durch die Futterachse 5 und die Führungsachse 4 der Spannbacke 7 gehenden Axialebene versetzt, die in Fig. 5 in der Zeichenebene liegt, in den Fig. 3, 4, 6, 7 dagegen auf der Zeichenebene senkrecht steht und sie jeweils in der Spur 16 schneidet. Die Versetzung ist im einzelnen so gewählt, daß die Spannkanten 13 in Drehrichtung des Bohrfuttes beim Bohren (Pfeile 11) vor der jeweiligen Axialfläche 16 liegen, wobei das Versetzungsmaß in der Zeichnung mit D bezeichnet ist. Die Spannbacken 7 können sich wegen ihres kreiszylindrischen Querschnitts in den Führungsbohrungen 3 um die Führungsachse 4 begrenzt verdrehen, da der Eingriff der Zahnreihe 10 am Stellgewinde 9 mit einem unvermeidbaren kleinen Spiel behaftet ist. Diese Verdrehbarkeit ist in Fig. 6 durch die Pfeile 17, 18 angedeutet. Die die Verdrehung in Richtung der Pfeile 17, 18 begrenzenden beiden Endlagen sind durch den sich beim Verdrehen ergebenden jeweiligen Formschluß im Eingriff der der Zahnreihe 10 an der Spannbacke 7 am Stellgewinde 9 bestimmt. Die Fig. 6 zeigt den Fall, daß die Spannbacke 7 zwar an den Werkzeugschaft 12 bis gerade zur Berührung der Spannkante 13 angestellt, aber noch nicht gegen ihn verspannt ist. Wird die Spannbacke 7 aus dieser Stellung weiter gegen den Werkzeugschaft zum Spannen des Werkzeugs vorgeschoben, verdreht sich die Spannbacke 7 in Richtung des Pfeiles 17 bis in ihre dieser Drehrichtung entsprechende Endlage, die sie beim weiteren Spannvorgang beibehält. Unterstützt wird diese Drehung der Spannbacke 7 noch durch die Stellhülse 8, die beim Verdrehen in der dem Spannen des Bohrfutters entsprechenden Richtung (d. h. entgegen den Pfeilen 11) die Spannbacken 7 über den mit ihnen am Stellgewinde 10 bestehenden Kraftschluß in Richtung des Pfeiles 17 mitzunehmen und zu verdrehen versucht. Ist der Werkzeugschaft 12 auf diese Weise zwischen den Spannkanten 13 der Spannkanten 7 eingespannt und beginnt der Bohrvorgang, so führt der am Bohrwerkzeug sich bemerkbar machende Bohrwiderstand zu einem Drehmoment, das den Werkzeugschaft 12 relativ zum Bohrfutter entgegengesetzt zu dessen Drehrichtung (Pfeile 11) in Richtung des in Fig. 6 eingetragenen Pfeiles 20 bremst. Dieses Widerstandsmoment hat zur Folge, daß der Werkzeugschaft 12 die Spannbacken 7 in Richtung des Pfeiles 18 aus der vorverdrehten Endlage herauszudrehen versucht. Bei dieser Drehung ergeben die Spannkanten 13 in Bezug auf die Führungsachsen 4 eine Exzenterklemmung mit entsprechender Verfestigung der Werkzeugeinspannung, wobei sich die Spannkanten 13 sogar in den Werkzeugschaft 12 eingraben können und die Einspannung sich um so mehr verfestigt, je höher das vom Werkzeugschaft 12 ausgehende Widerstandsmoment ist. In Fig. 7 sind auf der Mantelfläche des Werkzeugschaftes 12 die Linien 21', 21'', 21''' dargestellt, längs deren die Spannkante 13 einer Spannbacke 7 in deren verschiedenen Drehstellungen gegen den Werkzeugschaft 12 anliegt. Die Linie 21'' entspricht dabei der in Fig. 6 gezeigten Drehstellung der Spannbacke 7. Wird das Bohrfutter weiter verspannt, verdreht sich die Spannbacke 7 in Richtung des Pfeiles 17 in die vorverdrehte Endlage. In dieser Endlage verläuft die Spannkante 13 am Werkzeugschaft 12 längs der Linie 21'. Wird anschließend die Spannbacke durch das Widerstandsmoment des Werkzeugs in Richtung des Pfeiles 18 beim Bohren zurückverdreht, kann sich die Spannbacke über die in Fig. 6 gezeigte Situation hinaus verdrehen, so daß die Spannkante 13 die in Fig. 7 durch die Linie 21''' gekennzeichnete zurückverdrehte Lage einnehmen kann. Während die Stellen c und d oberhalb und die Stelle b noch gerade in der durch die Führungsachsen 4 gehenden Kegelfläche 6 liegen, liegt die Stelle a unterhalb dieser Kegelfläche, mit dem Ergebnis, daß sich beim Verdrehen der Spannbacke die Spannkante 13 und damit die Linien 21', 21'', 21''' an der Stelle a in entgegengesetzter Richtung wie an den Stellen c und d bewegen. Man erkennt daraus, daß im allgemeinen die Spannkante 13 nicht nach vorn über die Kegelfläche 6 vorstehen und die Spannbacke 13 in der Ebene 22 enden sollte, die durch die Schnittpunkte der Spannkanten 13 mit der Kegelfläche 6 geht. Stehen die Spannbacken 7 über diese Ebene 22 vor, wie es in der Zeichnung jeweils gestrichelt dargestellt ist, sollte die darauf entfallende Länge der Spannkante 13 nur sehr kurz im Verhältnis zu der sich oberhalb der Kegelfläche 6 erstreckenden Spannkantenlänge sein und im übrigen möglichst dafür Sorge getragen werden, daß die Spannkante des gestrichelten Backenteils entweder überhaupt nicht am Werkzeugschaft 12 anliegt oder sich doch zumindest beim Übergang 21' - 21'' - 21''' so früh wie möglich vom Werkzeugschaft 12 löst. - Im übrigen können die Winkel der die Spannkante 13 bildenden Flankenflächen 23 weitgehend frei gewählt werden, wobei nur darauf zu achten ist, daß sie bei der Verdrehung der Spannbacken 7 nicht zu einer tangentialen Anlage am Werkzeugschaft 12 kommen können, und daß die Mitnahme der Spannkante 13 durch den Werkzeugschaft 12 beim Verdrehen in Richtung der Pfeile 18, 20 sicher gestellt ist. Auch sollte die Spannkante 13 nicht zu spitz sein, damit ein unnötig tiefes Eindringen der Spannkante in den Werkzeugschaft 12 vermieden wird.

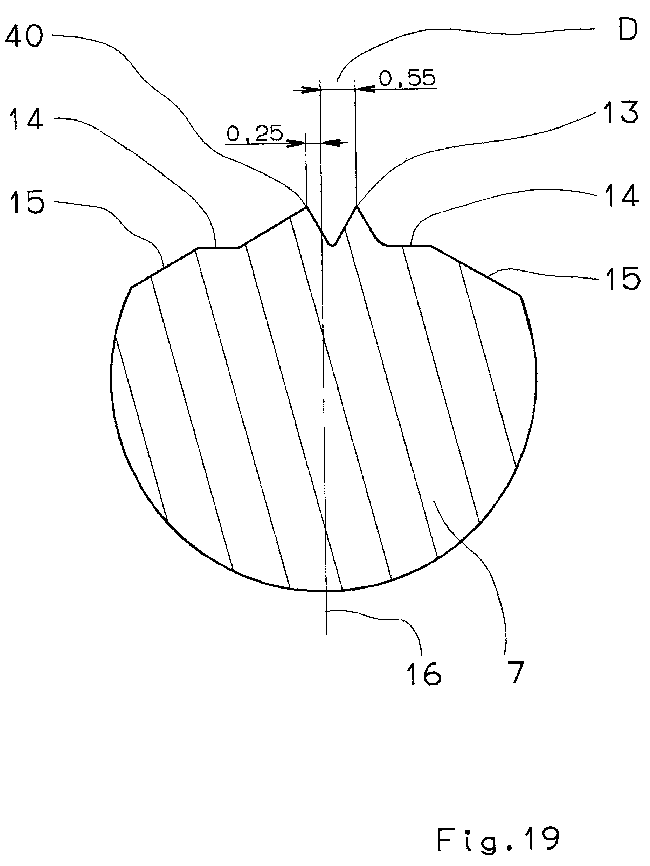

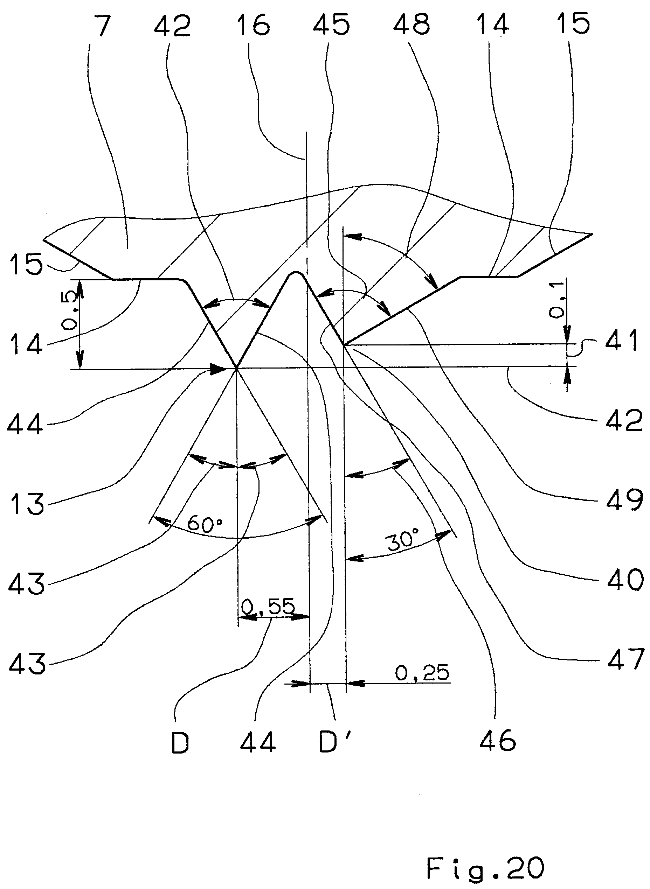

In den Fig. 2 bis 7 sind die Spannbacken 13 jeweils nur mit der ersten Spannkante 13 dargestellt, um die Erfindung einfacher erläutern zu können. Erfindungsgemäß aber besitzen die Spannbacken 13 entsprechend den Fig. 19 und 20 jeweils noch eine zweite Spannkante 40, die gesehen in der Drehrichtung des Bohrfutters beim Bohren, hinter der ersten Spannkante 13 liegt und um den Doppelpfeil 41 radial nach außen gegenüber der Tangentialebene 42 versetzt ist, die durch die erste, voranlaufende Spannkante 13 geht und senkrecht auf der durch die Führungsachse 4 der Spannbacke 7 und durch die Futterachse 5 gehenden Axialebene 16 steht. Der durch den Doppelpfeil 41 angedeutete Abstand zwischen den beiden Spannkanten 13, 40 beträgt 0,1 mm und ist damit etwa gleich der Dicke des in der Zeichnung nicht dargestellten Bartes, der sich an einem weichen Werkzeugschaft beim Eingraben der ersten, voranlaufenden Spannkante 13 hinter ihr aufwirft. Die zweite nachlaufende Spannkante 40 liegt, gesehen in Drehrichtung des Bohrfutters beim Drehen, hinter der Axialebene 16, und zwar mit einem Abstand D' von ihr, der kleiner ist als der Abstand D zwischen der Axialebene 16 und der ersten, voranlaufenden Spannkante 13. Im Ausführungsbeispiel beträgt der jeweils auf die Axialebene 16 bezogene Abstand D der ersten, voranlaufenden Spannkante 13 etwa 0,55 mm, der Abstand D'der zweiten, nachlaufenden Spannkante 40 etwa 0,25 mm. Im übrigen bilden die Spannkanten 13, 40 jeweils eine Schneide. An der ersten, voranlaufenden Spannkante 13 beträgt der Schneidenwinkel 42 etwa 60° und der Neigungswinkel 43 jeder Schneidenflanke 44 gegenüber der Axialebene 16 je 30°. An der zweiten, nachlaufenden Spannkante 40 beträgt der mit 45 bezeichnete Schneidenwinkel 90° und, jeweils bezogen auf die Axialebene 16, der Neigungswinkel 46 der voranlaufenden Schneidenflanke 47 30° und der mit 48 bezeichnete Neigungswinkel der nachlaufenden Schneidenflanke 49 etwa 60°.

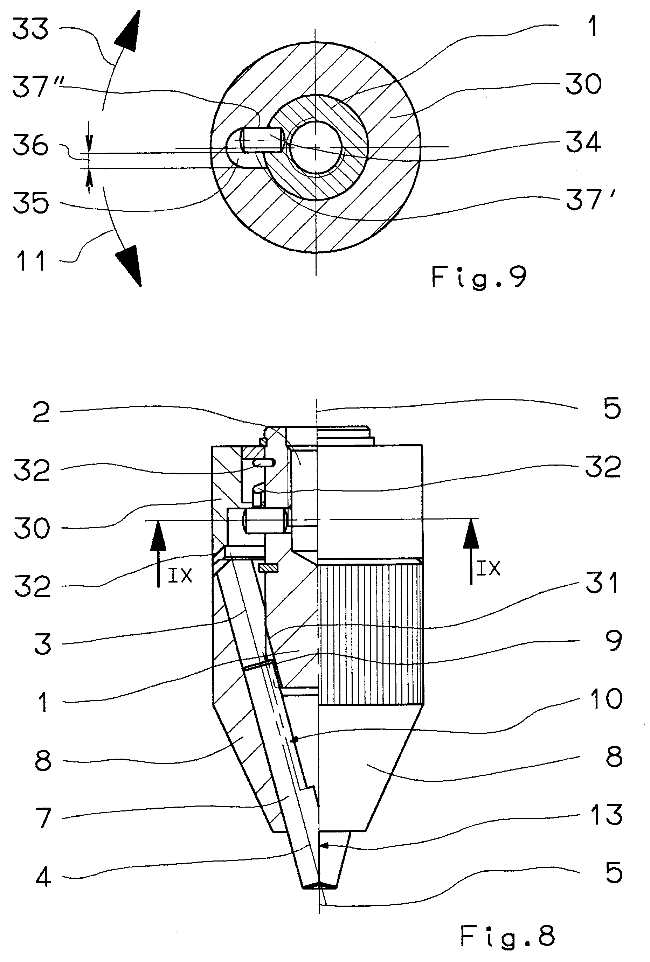

Die bisher beschriebenen Bohrfutter mit im Futterkörper 1 geführten Spannbacken 7 besitzen keine selbst- oder nachspannenden Eigenschaften. Jedoch ist die Erfindung nicht auf solche Bohrfutter beschränkt; sie kann selbstverständlich auch bei selbst- und nachspannenden Bohrfuttern verwirklicht werden, wie solche Bohrfutter beispielsweise in den Fig. 8 und 9 dargestellt sind. Hier befinden sich die Führungsbohrungen 3 für die Spannbacken 7 in der Stellhülse 8, während das Stellgewinde 9 am Futterkörper 1 vorgesehen ist, wozu der Futterkörper 1 eine mit ihren Mantelgeraden jeweils parallel zur Führungsrichtung 4 der Spannbacken 7 verlaufende Kegelfläche 31 aufweist, auf der das Stellgewinde 9 ausgebildet ist. Weiter ist der Sperring 30 am Futterkörper 1 gegen die Kraft einer Feder 32 jeweils zwischen zwei Endstellungen sowohl verdrehbar als auch axial verschiebbar. Der Sperring 30 kann mit der Stellhülse 8 über zwei Zahnkränze 32 drehfest verbunden werden, die in der in der Fig. 8 dargestellten, unter der Kraft der Feder 32 eingenommenen axialen Endstellung des Sperrings 30 miteinander im Eingriff stehen. Die Feder 32 beaufschlagt den Sperring im übrigen in dem dem Öffnen des Bohrfutters entsprechenden, durch den Pfeil 11 in Fig. 9 angedeuteten Drehsinn der Stellhülse 8, was zur Folge hat, daß sich der Sperring 30 in von der Stellhülse 8 entkuppeltem Zustand in Umfangsrichtung in derjenigen Drehstellung befindet, aus der er sich in der dem Schließen des Futters entsprechenden, durch den Pfeil 33 angedeuteten Drehsinn der Stellhülse 8 in seine andere Endstellung verdrehen kann. Zur Drehbegrenzung des Sperrings 30 trägt der Futterkörper 1 einen radial abstehenden Anschlagstift 34, der in eine zum Futterkörper 1 und zur Stellhülse 8 hin offene Ausnehmung 35 des Sperrings 30 greift. Die Ausnehmung 35 ist in Umfangsrichtung des Futters um den Nachspannweg (Doppelpfeil 36 in Fig. 9) größer als die Dicke des Anschlagstiftes 34. Ihre Enden in Umfangsrichtung bilden Anschlagflächen 37', 37'' für den Anschlagstift 34, die die beiden Endstellungen für den Sperring in Umfangsrichtung festlegen. - Wird das Werkzeug zwischen den Spannbacken 7 zunächst von Hand gespannt, verdrehen sich die Spannbacken in gleicher Weise wie schon anhand der Fig. 2 bis 7 für das Bohrfutter nach Fig. 1 im Zusammenhang mit dem Spannen des Bohrwerkzeugs beschrieben. Die Spannbacken werden in die vorverdrehte Endlage gedreht. Im Bohrbetrieb findet dann zunächst die übliche Nachspannung statt, wobei sich die Stellhülse 8 mitsamt den Spannbacken 7 als ganzes gegenüber dem Futterkörper 1 verdreht, bis der Anschlagstift 34 an der Anschlagfläche 37' zur Anlage kommt und diese Nachspannung beendet. Von dann an gelten ersichtlich wieder die anhand der Fig. 1 bis 7 angestellten Betrachtungen bezüglich der Verdrehung der Spannbacken 7 des Bohrfutters während des Bohrbetriebs in gleicher Weise auch für das Bohrfutter nach den Fig. 8 und 9, so daß es sich erübrigt, dieses Verhalten der Spannbacken für das Bohrfutter nach den Fig. 8 und 9 nochmals darzulegen. Es darf hierfür in jedem Punkt auf die Ausführungen zu den Fig. 2 bis 7 Bezug genommen werden.

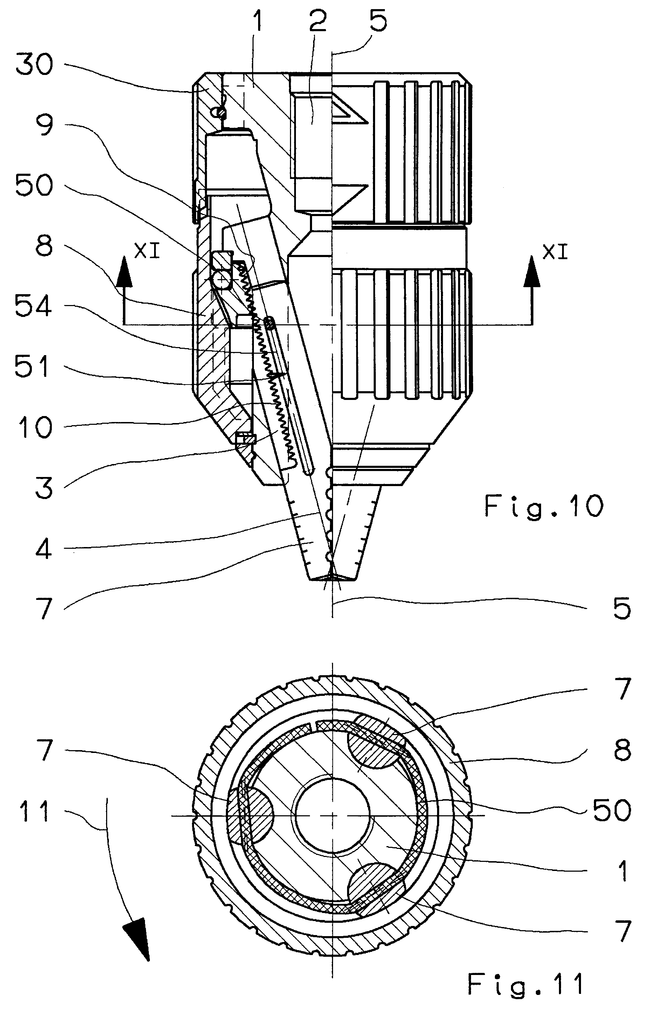

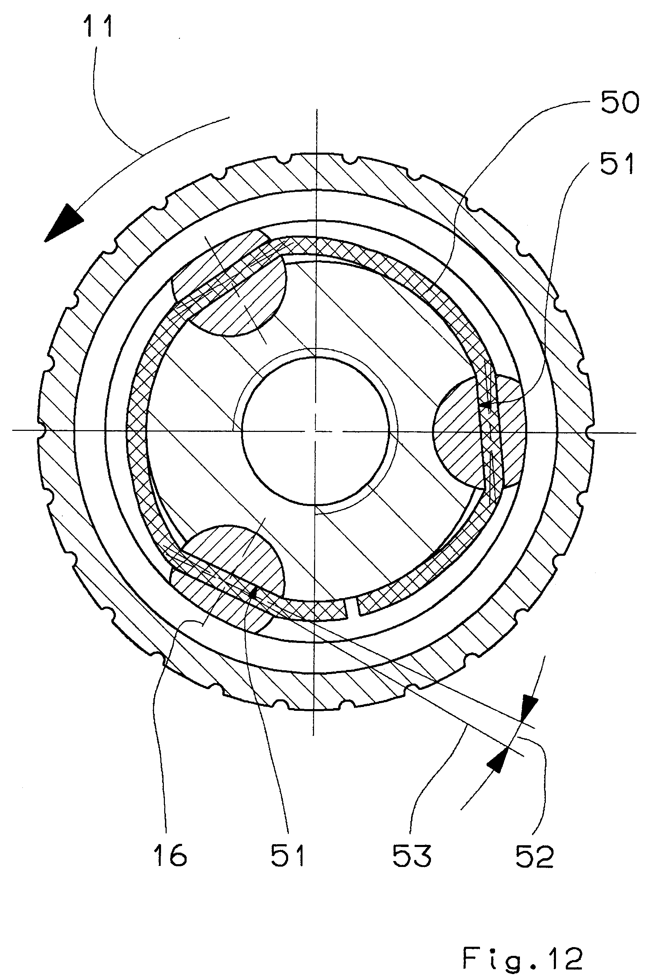

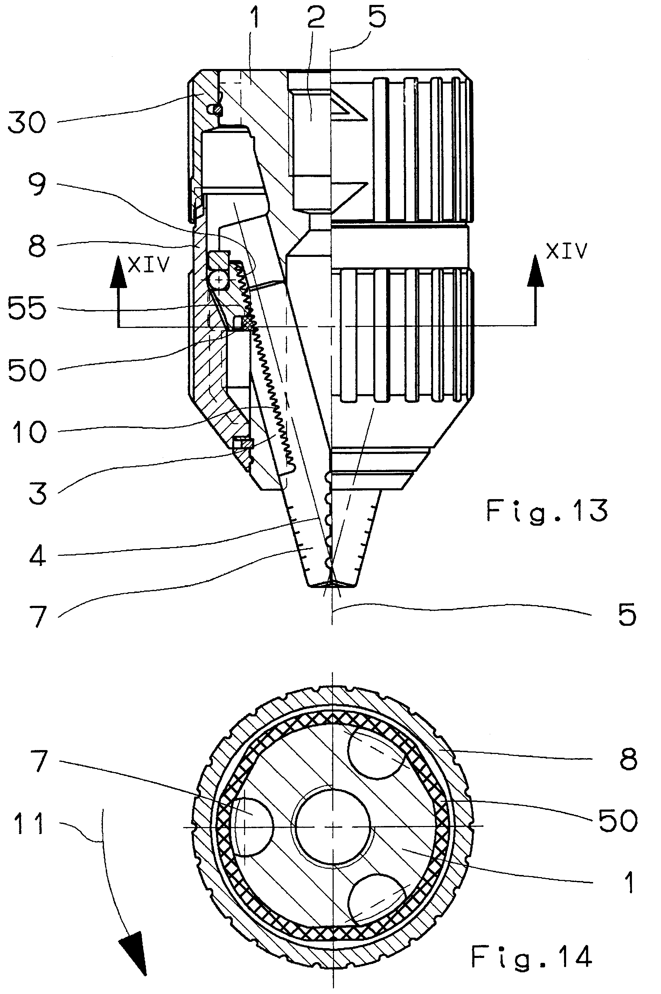

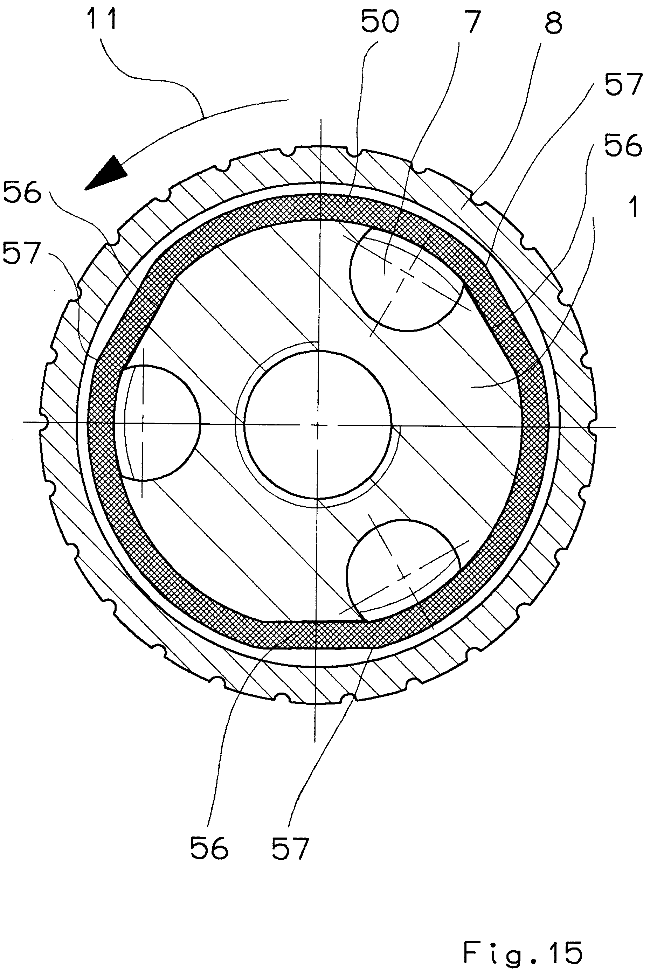

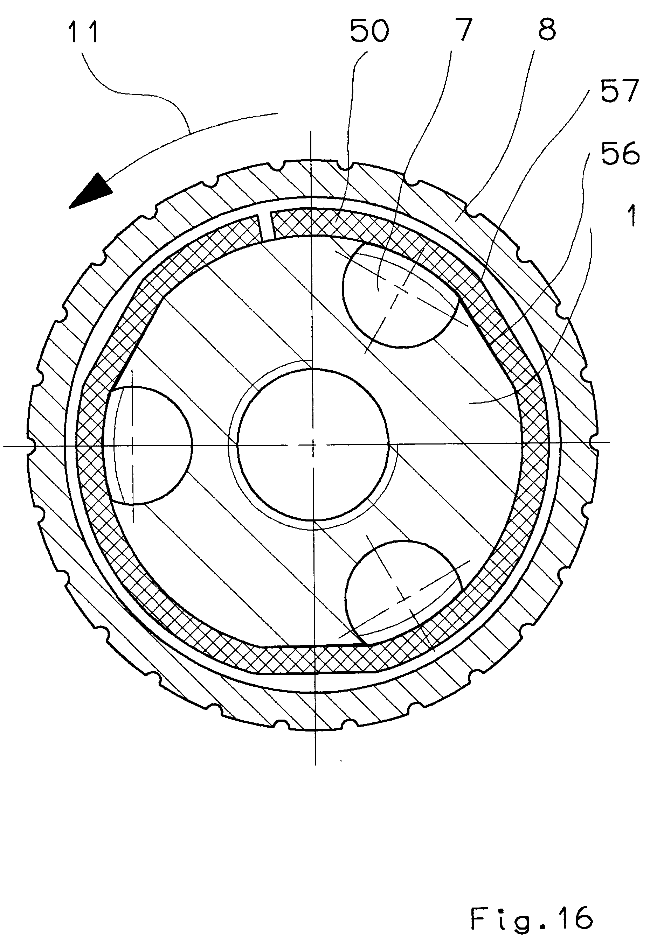

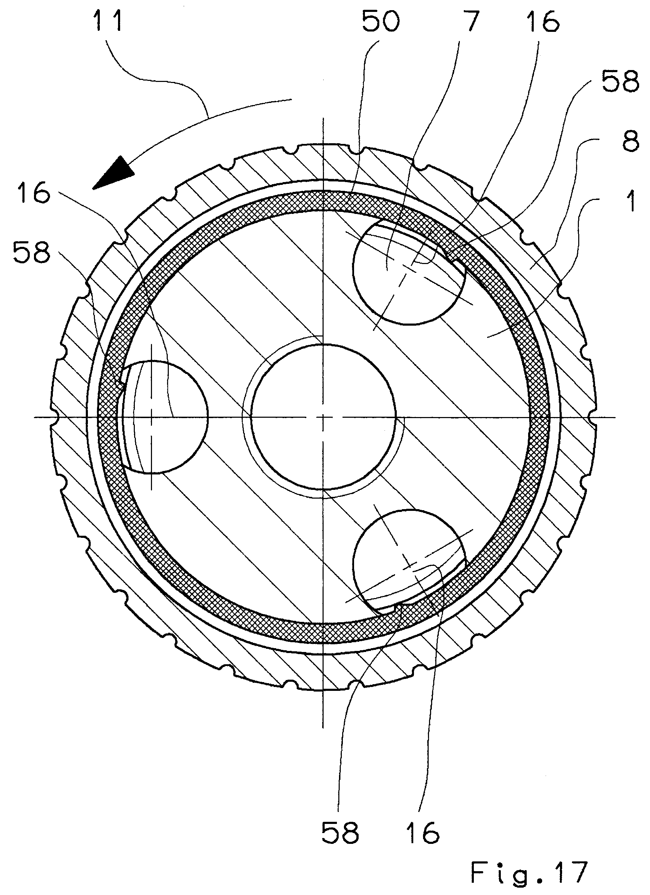

Die Fig. 10 bis 18 zeigen Ausführungsbeispiele eines Bohrfutters mit am Futterkörper 1 geführten Spannbacken 7 und mit einem Federglied 50, das die Spannbacken 7 schon bei offenem Bohrfutter in die vorverdrehte Endlage verdreht, beim Bohren aber das Verdrehen der Spannbacken 7 in die zurückverdrehte Endlage nicht verhindert. Dazu ist in den Fig. 10 bis 17 das Federglied 50 als Ring ausgebildet, der den Spannbacken 7 jeweils in einer Sitzfläche 51 anliegt, die mindestens um den Winkel der Vorverdrehung gegenüber der Tangentialebene 53 geneigt ist, die auf der durch die Führungsachse 4 der jeweiligen Spannbacke 7 und durch die Futterachse 5 gehenden Axialebene senkrecht steht. Dieser Neigungswinkel ist in Fig. 12 durch den Doppelpfeil 52 angedeutet. In dieser Figur, wie im übrigen aber auch in Fig. 16, ist das Federglied 50 ein elastisch biegbarer, in Umfangsrichtung geteilter Federring. In den Fig. 10 bis 12 ist die Sitzfläche für diesen Federring von der Wandung einer in der Spannbacke 7 vorgesehenen, den Federring aufnehmenden Querbohrung 54 gebildet, deren Bohrungsachse den vorstehend schon erwähnten Neigungswinkel 52 mit der Tangentialebene 53 einschließt. In den Ausführungsbeispielen nach den Fig. 14, 15 und 17 dagegen ist das Federglied 50 ein im Umfang geschlossener und elastisch dehnbarer Ring. Das Federglied 50 verläuft dabei in einer Ringnut 55 in der Stellhülse 8 und liegt den Spannbacken 7 radial von außen an. Im übrigen ist in Drehrichtung (Pfeil1 1) des Bohrfutters beim Bohren hinter jeder Spannbacke 7 am Futterkörper 1 eine radial eingezogene Stützfläche 56 vorgesehen, der das Federglied 50 anliegt, so daß es einen Knick 52 erfährt, durch den die Verdrehung der Spannbacken 7 in die vorverdrehte Endlage begünstigt wird. Im Ausführungsbeispiel nach Fig. 17 ist das ringförmige Federglied 50 für jede Spannbacke 7 mit einer Nase 58 versehen und liegt jeweils nur mit dieser Nase 58 an der Spannbacke 7 an, und zwar in Drehrichtung des Bohrfutters beim Bohren hinter der durch die Führungsachse 4 der Spannbacke 7 und durch die Futterachse 5 gehenden Axialebene 16.

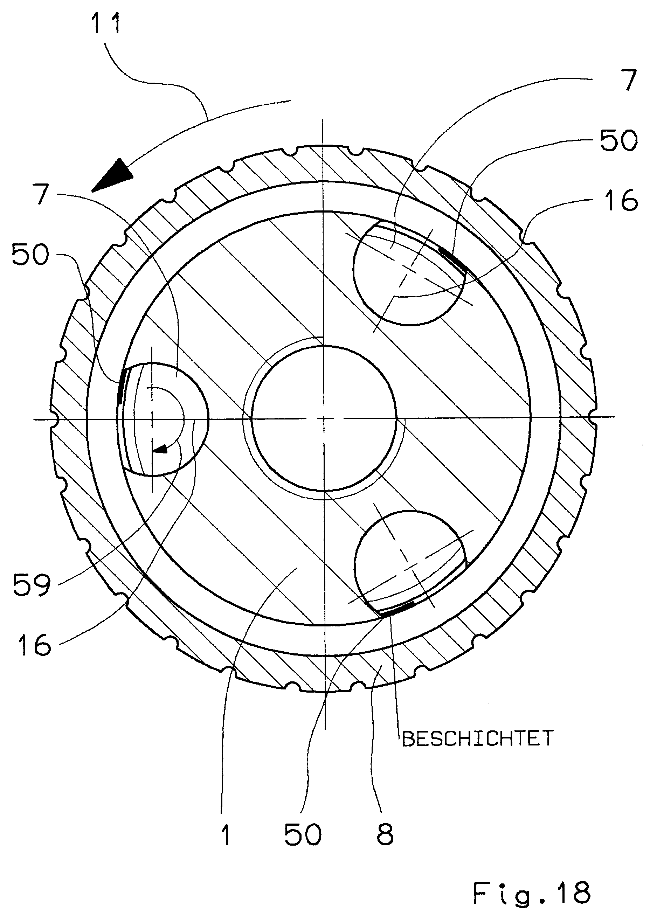

Im Ausführungsbeispiel nach Fig. 18 ist das Federglied 50 an jeder Spannbacke 7 von einem beispielsweise als Beschichtung hergestellten elastischen Druckstück gebildet, das zwischen der Spannbacke 7 und dem Stellgewinde 9 auf der in Drehrichtung des Bohrfutters beim Bohren wiederum rückwärtigen Seite der durch die Führungsachse 4 der Spannbacke und durch die Futterachse 5 gehenden Axialebene 16 liegt, so daß es auf die Spannbacke ein Drehmoment in Richtung des Pfeiles 59 ausübt. - Zwar ist in den Fig. 10 bis 18 das Federglied 50 nur am Beispiel nicht nachspannender Bohrfutter beschrieben, aber selbstverständlich gilt an die gleichen Betrachtungen auch für nachspannende Bohrfutter entsprechend den Fig. 8 und 9, so daß auch derartige Bohrfutter in gleicher Weise mit dem Federglied 50 ausgerüstet werden können.

## Patentansprüche

1. Bohrfutter für ein drehendes oder drehschlagendes Bohrwerkzeug, mit einem koaxial an eine Bohrspindel anschließbaren Futterkörper (1), mit einer zur Futterachse (5) koaxialen, drehbar und axial unverschiebbar am Futterkörper (1) gelagerten Stellhülse (8), mit Führungsbohrungen (3), deren Führungsachsen (4) in einer zur Futterachse (5) koaxialen, sich nach vorn zum Bohrwerkzeug hin verjüngenden Kegelfläche (6) verlaufen, ferner mit in den Führungsbohrungen (3) verschiebbar geführten Spannbacken (7), die zwischen sich eine Aufnahme für den Schaft des Bohrwerkzeugs bilden, wozu die in den Führungsbohrungen (3) um die jeweilige Führungsachse (4) begrenzt verdrehbaren Spannbacken (7) je eine zur Anlage am Werkzeugschaft kommende, sich im wesentlichen parallel zur Futterachse (5) erstreckende Spannkante (13) aufweisen, die sich im wesentlichen nur axial oberhalb, d. h. auf der Bohrspindel zugewandten Seite der durch die Führungsachsen (4) gehenden Kegelfläche (6) erstreckt, und mit einem mit der Futterachse (5) koaxialen Stellgewinde (9), das an jeder Spannbacke (7) zu deren Verschieben mit einer an der Spannbacke (7) ausgebildeten Zahnreihe (10) im Eingriff steht, wobei das Stellgewinde (9) an der Stellhülse (8) und die Führungsbohrungen (3) am Futterkörper (1) oder, im Fall eines selbsttätig spannenden Bohrfutters mit Nachspannbegrenzung, umgekehrt das Stellgewinde (9) am Futterkörper (1) und die Führungsbohrungen (3) an der Stellhülse (8) vorgesehen sind, dadurch gekennzeichnet, daß die Spannkante (13) mit ihrer am Werkzeugschaft im wesentlichen zur Anlage kommenden Länge an jeder Spannbacke (7), gesehen in der Drehrichtung (Pfeil 11) des Bohrfutters beim Bohren, vor der durch die Führungsachse (4) der Führungsbohrung (3) der Spannbacke (7) und durch die Futterachse (5) gehenden Axialebene (16) liegt und daß an jeder Spannbacke (7) eine weitere Spannkante (40), gesehen in der Drehrichtung des Bohrfuttes beim Bohren, hinter der ersten Spannkante (13) vorgesehen ist, die bezüglich des Bohrfutters radial nach außen gegenüber der Tangentialebene (42) versetzt ist, die durch die erste voranlaufende Spannkante (13) geht und senkrecht steht auf der durch die Führungsachse (4) der Spannbacke (7) und durch die Futterachse (5) gehenden Axialebene (16).

2. Bohrfutter nach Anspruch 1, dadurch gekennzeichnet, daß der Abstand (Pfeil 41) zwischen der Tangentialebene (42) und der zweiten nachlaufenden Spannkante (13) etwa 0,1 mm beträgt.

3. Bohrfutter nach Anspruch 1 oder 2, dadurch gekennzeichnet, daß der Abstand zwischen den beiden Spannkanten (13), gesehen in Drehrichtung des Bohrfutters, etwa gleich der Dicke des Bartes ist, der sich an einem weichen Werkzeugschaft beim Eingraben der ersten, voranlaufenden Spannkante (13) hinter ihr aufwirft.

4. Bohrfutter nach einem der Ansprüche 1 bis 3, dadurch gekennzeichnet, daß die zweite, nachlaufende Spannkante (40), gesehen in Drehrichtung des Bohrfutters beim Bohren, hinter der Axialebene (16) liegt, und zwar mit einem Abstand (D') von ihr, der kleiner ist als der Abstand (D) zwischen der Axialebene (16) und der ersten, voranlaufenden Spannkante (13).

5. Bohrfutter nach Anspruch 4, dadurch gekennzeichnet, daß der jeweils auf die Axialebene (16) bezogene Abstand (D) der ersten, voranlaufenden Spannkante (13) etwa 0,55 mm, der Abstand (D') der zweiten, nachlaufenden Spannkante (40) etwa 0,25 mm beträgt.

6. Bohrfutter nach einem der Ansprüche 1 bis 5, dadurch gekennzeichnet, daß die Spannkanten (13, 40) Schneiden bilden, wobei an der ersten, voranlaufenden Spannkante (13) der Schneidenwinkel (42) etwa 60° und der Neigungswinkel (43) beider Schneidenflanken (44) je 30° gegenüber der Axialebene (16), an der zweiten nachlaufenden Spannkante (40) der Schneidenwinkel (45) 90° und, bezogen auf die Axialebene (16), die Neigung der voranlaufenden Schneidenflanke (47) 30° und der nachlaufenden Schneidenflanke (49) 60° beträgt.

7. Bohrfutter nach einem der Ansprüche 1 bis 6, dadurch gekennzeichnet, daß ein Federglied (50) vorgesehen ist, das die Spannbacken schon bei offenem Bohrfutter in die vorverdrehte Endlage verdreht, beim Bohren aber das Verdrehen der Spannbacken (7) in die zurückverdrehte Endlage mit ebenfalls noch vor der Axialebene (16) liegender erster Spannkante (13) nicht verhindert.

8. Bohrfutter nach Anspruch 7, dadurch gekennzeichnet, daß das Federglied (50) als Ring ausgebildet ist, der den Spannbacken (7) jeweils in einer Sitzfläche (51) anliegt, die mindestens um den Winkel (52) der Vorverdrehung gegenüber der Tangentialebene (53) geneigt ist, die auf der durch die Führungsachse (4) der jeweiligen Spannbacke (7) und durch die Futterachse (5) gehenden Axialebene senkrecht steht.

9. Bohrfutter nach Anspruch 7 oder 8, dadurch gekennzeichnet, daß das Federglied (50) ein elastisch biegbarer, in Umfangsrichtung geteilter Federring ist.

10. Bohrfutter nach Anspruch 9, dadurch gekennzeichnet, daß die Sitzfläche (51) für den Federring von der Wandung einer in der Spannbacke (7) vorgesehenen, den Federring aufnehmenden Querbohrung (54) gebildet ist.

11. Bohrfutter nach Anspruch 7 oder 8, dadurch gekennzeichnet, daß das Federglied (50) ein im Umfang geschlossener und elastisch dehnbarer Ring ist.

12. Bohrfutter nach Anspruch 9 oder 11, dadurch gekennzeichnet, daß bei am Futterkörper (1) ausgebildeten Führungsbohrungen (3) das in einer Ringnut (55) der Stellhülse (8) verlaufende Federglied (50) den spannbacken (7) radial von außen anliegt.

13. Bohrfutter nach Anspruch 12, dadurch gekennzeichnet, daß das Federglied (50) in Drehrichtung des Bohrfutters beim Bohren hinter jeder Spannbacke (7) an einer radial eingezogenen Stützfläche (56) des Futterkörpers (1) anliegt.

14. Bohrfutter nach Anspruch 9 oder 11, dadurch gekennzeichnet, daß das Federglied (50) für jede Spannbacke (7) mit einer Nase (58) versehen ist und jeweils nur mit der Nase (58) an der Spannbacke (7) anliegt, und zwar in Drehrichtung des Bohrfutters beim Bohren hinter der durch die Führungsachse (4) der Spannbacke (7) und durch die Futterachse (5) gehenden Axialebene (16).

15. Bohrfutter nach Anspruch 7, dadurch gekennzeichnet, daß das Federglied (50) an jeder Spannbacke (7) von einem elastischen Druckstück gebildet ist, das zwischen der Spannbacke (7) und dem Stellgewinde (9) auf der in Drehrichtung des Bohrfutters beim Bohren rückwärtigen Seite der durch die Führungsachse der Spannbacke (7) und durch die Futterachse (5) gehenden Axialebene (16) liegt.

## Claims

1. A drilling chuck for a rotary or rotary-hammer drilling tool, having a chuck body (1) which can be connected coaxially to a drilling spindle, an adjusting sleeve (8) which is coaxial with respect to the chuck axis (5) and which is mounted rotatably and axially immovably on the chuck body (1), guide bores (3) whose guide axes (4) extend in a conical surface (6) which is coaxial with respect to the chuck axis (5) and which tapers forwardly towards the drilling tool, clamping jaws (7) which are guided displaceably in the guide bores (3) and which form between them a receiving means for the shank of the drilling tool, for which purpose the clamping jaws (7) which are limitedly rotatable in the guide bores (3) about the respective guide axis (4) each have a clamping edge (13) which comes to bear against the tool shank and which extends substantially parallel to the chuck axis (5) and which extends substantially only axially above, that is to say on the side which is towards the drilling spindle, of the conical surface (6) passing through the guide axes (4), and an adjusting screwthread (9) which is coaxial with the chuck axis (5) and which on each clamping jaw (7) for displacement thereof is in engagement with a row of teeth (10) on the clamping jaw (7), wherein the adjusting screwthread (9) is provided on the adjusting sleeve (8) and the guide bores (3) are provided on the chuck body (1) or, in the case of an automatically tightening drilling chuck with re-tightening limitation, conversely the adjusting screwthread (9) is provided on the chuck body (1) and the guide bores (3) are provided on the adjusting sleeve (8), characterised in that the clamping edge (13), with its length which comes substantially to bear against the tool shank, on each clamping jaw (7), as viewed in the direction of rotation (arrow 11) of the drilling chuck in the drilling operation, lies in front of the axial plane (16) which passes through the guide axis (4) of the guide bore (3) of the clamping jaw (7) and through the chuck axis (5), and that provided on each clamping jaw (7) is a further clamping edge (40), as viewed in the direction of rotation of the drilling chuck in the drilling operation, behind the first clamping edge (13), which in relation to the drilling chuck is displaced radially outwardly with respect to the tangential plane (42) which passes through the first leading clamping edge (13) and which is perpendicular to the axial plane (16) which passes through the guide axis (4) of the clamping jaw (7) and through the chuck axis (5).

2. A drilling chuck according to claim 1 characterised in that the spacing (arrow 41) between the tangential plane (42) and the second trailing clamping edge (13) is about 0.1 mm.

3. A drilling chuck according to claim 1 or claim 2 characterised in that the spacing between the two clamping edges (13), as viewed in the direction of rotation of the drilling chuck, is approximately equal to the thickness of the burr which is thrown up on a soft tool shank behind the first leading clamping edge (13) when that clamping edge digs in.

4. A drilling chuck according to one of claims 1 to 3 characterised in that the second trailing clamping edge (40), as viewed in the direction of rotation of the drilling chuck in the drilling operation, is behind the axial plane (16), are specifically at a spacing (D') therefrom which is smaller than the spacing (D) between the axial plane (16) and the first leading clamping edge (13).

5. A drilling chuck according to claim 4 characterised in that the spacing (D), related to the axial plane (16), of the first leading clamping edge (13) is about 0.55 mm and the spacing (D'), related to the axial plane (16), of the second trailing clamping edge (40) is about 0.25 mm.

6. A drilling chuck according to one of claims 1 to 5 characterised in that the clamping edges (13, 40) form cutting edges, wherein at the first leading clamping edge (13) the cutting edge angle (42) is about 60° and the angle of inclination (43) of each of the two cutting edge flanks (44) is 30° relative to the axial plane (16), and at the second trailing clamping edge (40) the cutting edge angle (45) is 90° and, with respect to the axial plane (16), the inclination of the leading cutting edge flank (47) is 30° and of the trailing edge flank (49) is 60°.

7. A drilling chuck according to one of claims 1 to 6 characterised in that there is provided a spring member (50) which, when the drilling chuck is open, already rotates the clamping jaws into the forwardly rotated end position but in the drilling operation does not prevent rotation of the clamping jaws (7) into the backwardly rotated end position with the first clamping edge (13) also still being disposed in front of the axial plane (16).

8. A drilling chuck according to claim 7 characterised in that the spring member (50) is in the form of a ring which bears against each of the clamping jaws (7) at a respective seat surface (51) which is inclined at least through the angle (52) of the forward rotary movement relative to the tangential plane (53) which is perpendicular to the axial plane passing through the guide axis (4) of the respective clamping jaw (7) and through the chuck axis (5).

9. A drilling chuck according to claim 7 or claim 8 characterised in that the spring member (50) is a resiliently bendable spring ring which is divided in the peripheral direction.

10. A drilling chuck according to claim 9 characterised in that the seat surface (51) for the spring ring is formed by the wall of a transverse bore (54) which is provided in the clamping jaw (7) and which receives the spring ring.

11. A drilling chuck according to claim 7 or claim 8 characterised in that the spring member (50) is a peripherally closed resiliently stretchable ring.

12. A drilling chuck according to claim 9 or claim 11 characterised in that, in the case of guide bores (3) being provided on the chuck body (1), the spring member (50) which extends in an annular groove (55) in the adjusting sleeve (8) bears against the clamping jaws (7) radially from the outside.

13. A drilling chuck according to claim 12 characterised in that in the direction of rotation of the drilling chuck in the drilling operation the spring member (50) bears behind each clamping jaw (7) against a radially inwardly disposed support surface (56) of the chuck body (1).

14. A drilling chuck according to claim 9 or claim 11 characterised in that the spring member (50) is provided with a nose (58) for each clamping jaw (7) and bears only with the nose (58) against the respective clamping jaw (7), more specifically in the direction of rotation of the drilling chuck in the drilling operation behind the axial plane (16) which passes through the guide axis (4) of the clamping jaw (7) and through the chuck axis (5).

15. A drilling chuck according to claim 7 characterised in that the spring member (50) is formed on each clamping jaw (7) by a resilient pressure portion which is disposed between the clamping jaw (7) and the adjusting screwthread (9) on the side, which is rearward in the direction of rotation of the drilling chuck in the drilling operation, of the axial plane (16) which passes through the guide axis of the clamping jaw (7) and through the chuck axis (5).

## Revendications

1. Mandrin de perçage pour un outil de perçage rotatif ou roto-percutant, comportant un corps de mandrin (1) pouvant être raccordé coaxialement à une broche de perçage, une douille de réglage (8) coaxiale à l'axe (5) du mandrin et montée de manière à pouvoir tourner, sans possibilité de déplacement axial, sur le corps (1) du mandrin, des perçages de guidage (3), dont les axes de guidage (4) s'étendent sur une surface conique (6) qui est coaxiale à l'axe (5) du mandrin et se rétrécit vers l'avant en direction de l'outil de perçage, et comportant en outre des mâchoires de serrage (7), qui sont guidées avec possibilité de déplacement dans les perçages de guidage (3) et qui forment entre elles un logement servant à recevoir la tige de l'outil de perçage, les mâchoires de serrage (7), qui peuvent tourner de façon limitée dans les perçages de guidage (3) autour de l'axe respectif de guidage (4), comportant à cet effet des arêtes de serrage respectives (13), qui viennent s'appliquer contre la tige de l'outil et s'étendent essentiellement parallèlement à l'axe (5) du mandrin et qui s'étendent essentiellement uniquement axialement au-dessus, c'est-à-dire du côté tourné vers la broche de perçage, de la surface conique (6) passant par les axes de guidage (4), et comportant un filetage de réglage (9), qui est coaxial à l'axe (5) de mandrin et qui s'engage contre chaque mâchoire de serrage (7) pour la déplacer en engrenant avec une série de dents (10) formée sur la mâchoire de serrage (7), et dans lequel le filetage de réglage (9) est prévu sur la douille de réglage (8) et les perçages de guidage (3) sont aménagés dans le corps (1) du mandrin ou, dans le cas d'un mandrin de perçage a serrage automatique avec limitation de resserrage, inversement le filetage de réglage (9) est prévu sur le corps (1) du mandrin et les perçages de guidage (3) sont prévus sur la douille de réglage (8), caractérisé en ce que l'arête de serrage (13) est située, avec son étendue en longueur s'appliquant essentiellement sur la tige de l'outil, sur chaque mâchoire de serrage (7), et ce lorsqu'on regarde dans le sens de rotation (flèche 11) du mandrin de perçage lors du perçage, en avant du plan axial (16) qui passe par l'axe de guidage (4) du perçage de guidage (3) de la mâchoire de serrage (7) et par l'axe (5) du mandrin, et qu'une autre arête de serrage (40) est prévue sur chaque mâchoire de serrage (7), et ce lorsqu'on regarde dans le sens de rotation du mandrin de perçage lors du perçage, en arrière de la première arête de serrage (13), cette autre arête de serrage étant décalée radialement vers l'extérieur, en rapport avec le mandrin de perçage, par rapport au plan tangentiel (42) qui passe par la première arête de serrage avant (13) et est perpendiculaire au plan axial (16) passant par l'axe de guidage (4) de la mâchoire de serrage (7) et par l'axe (5) du mandrin.

2. Mandrin de perçage selon la revendication 1, caractérisé en ce que la distance (flèche 11) entre le plan tangentiel (42) et la seconde arête de serrage arrière (13) est égale à environ 0,1 mm.

3. Mandrin de perçage selon la revendication 1 ou 2, caractérisé en ce que, lorsqu'on regarde dans le sens de rotation du mandrin de perçage, la distance entre les deux arêtes de serrage (13) est approximativement égale à l'épaisseur de la barbe, qui est repoussée, sur une tige non rigide de l'outil, lors de l'enfoncement de la première arête de serrage avant (13), en arrière de cette arête de serrage.

4. Mandrin de perçage selon l'une des revendications 1 à 3, caractérisé en ce que la seconde arête de serrage aval (40) est située en arrière du plan axial (16), lorsqu'on regarde dans le sens de rotation du mandrin de perçage, et ce à une distance (D') de cet axe, qui est inférieure à la distance (D) entre le plan axial (16) et la première arête de serrage avant (13).

5. Mandrin de perçage selon la revendication 4, caractérisé en ce que la distance (D), rapportée respectivement au plan axial (16), de la première arête de serrage avant (13) est égale à environ 0,55 mm, et la distance (D') de la seconde arête de serrage arrière (40) est égale à environ 0,25 mm.

6. Mandrin de perçage selon l'une des revendications 1 à 5, caractérisé en ce que les arêtes de serrage (13,40) forment des tranchants, et l'angle de coupe (42) est égal à environ 60° au niveau de la première arête de serrage avant (13) et l'angle d'inclinaison (43) des deux flancs (44) du tranchant est égal respectivement à 30° par rapport au plan axial (16), l'angle de coupe (45) est égal à 90° au niveau de la seconde arête de serrage aval (40) et l'inclinaison du flanc avant (47) du tranchant est égale à 30° par rapport au plan axial (16) et que l'inclinaison du flanc aval (49) du tranchant par rapport au plan axial est égal à 60°.

7. Mandrin de perçage selon l'une des revendications 1 à 6, caractérisé en ce qu'il est prévu un élément de ressort (50), qui fait pivoter les mâchoires de serrage pour les amener dans la position finale préalablement pivotée, déjà lorsque le mandrin de perçage est ouvert, mais ne gêne pas, lors du perçage, la rotation des mâchoires de serrage (7) venant dans la position d'extrémité pivotée dans le sens rétrograde avec la première arête de serrage (13) encore située également en avant du plan axial (16).

8. Mandrin de perçage selon la revendication 7, caractérisé en ce que l'élément de ressort (50) est agencé sous la forme d'un anneau qui applique la mâchoire de serrage (7) respectivement contre une surface d'appui (51), qui est inclinée au moins de l'angle (52) de pivotement préalable, par rapport au plan tangentiel (53), qui est perpendiculaire au plan axial passant par l'axe de guidage (4) de la mâchoire de serrage respective (7) et par l'axe (5) du mandrin.

9. Mandrin de perçage selon la revendication 7 ou 8, caractérisé en ce que l'élément de ressort (50) est un ressort en forme d'anneau pouvant fléchir élastiquement qui est subdivisé dans la direction circonférentielle.

10. Mandrin de perçage selon la revendication 9, caractérisé en ce que la surface d'appui (51) pour le ressort en forme d'anneau est formée par la paroi d'un perçage transversal (54), qui est prévu dans la mâchoire de serrage (7) et loge le ressort en forme d'anneau.

11. Mandrin de perçage selon la revendication 7 ou 8, caractérisé en ce que l'élément de ressort (50) est un anneau fermé sur sa périphérie et pouvant être dilaté élastiquement.

12. Mandrin de perçage selon la revendication 9 ou 11, caractérisé en ce que, dans le cas où des perçages de guidage (3) sont aménagés dans le corps (1) du mandrin, l'élément de ressort (50), qui s'étend dans une gorge annulaire (55) de la douille de réglage (8), s'applique radialement à partir de l'extérieur contre la mâchoire de serrage (7).

13. Mandrin de perçage selon la revendication 12, caractérisé en ce que dans l'élément de ressort (50) s'applique, dans le sens de rotation du mandrin de perçage lors du perçage, en arrière de chaque mâchoire de serrage (7), contre une surface d'appui (56), radialement en retrait, du corps (1) du mandrin.

14. Mandrin de perçage selon la revendication 9 ou 11, caractérisé en ce que l'élément de ressort (50) comporte un bec (58), pour chaque mâchoire de serrage (7), et s'applique respectivement uniquement au moyen du bec (58) contre la mâchoire de serrage (7), et ce dans le sens de rotation du mandrin de perçage lors du perçage, en arrière du plan axial (16) passant par l'axe de guidage (4) de la mâchoire de serrage (7) et par l'axe (5) du mandrin.

15. Mandrin de perçage selon la revendication 7, caractérisé en ce que l'élément de ressort (50) est formé, sur chaque mâchoire de serrage (7), par un élément élastique de pression, qui est situé entre la mâchoire de serrage (7) et le filetage de réglage (9), sur le côté, qui est en arrière dans le sens de rotation du mandrin de perçage lors du perçage, du plan axial (16) passant par l'axe de guidage de la mâchoire de serrage (7) et par l'axe (5) du mandrin.
